# EUROPEAN PATENT SPECIFICATION

(11) **EP 3 657 475 B1**
(45) Date of publication and mention of the grant of the patent: **25.08.2021**
(21) Application number: 17925167.3
(22) Date of filing: 12.09.2017
(51) Int. Cl.: G09C 1/00, H04L 9/06

(54) **DATA PROCESSING APPARATUS, DATA PROCESSING METHOD, AND DATA PROCESSING PROGRAM**
DATENVERARBEITUNGSVORRICHTUNG, DATENVERARBEITUNGSVERFAHREN UND DATENVERARBEITUNGSPROGRAMM
DISPOSITIF, PROCÉDÉ ET PROGRAMME DE TRAITEMENT DE DONNÉES

(43) Date of publication of application: 27.05.2020
(73) Proprietor: Mitsubishi Electric Corporation, Chiyoda-ku Tokyo 100-8310 (JP)
(72) Inventor: HIRANO, Takato, Tokyo 100-8310 (JP); KAWAI, Yutaka, Tokyo 100-8310 (JP); KOSEKI, Yoshihiro, Tokyo 100-8310 (JP)
(74) Representative: Pfenning, Meinig & Partner mbB
(86) International application number: PCT/JP2017/032919
(87) International publication number: WO 2019/053788

(56) References cited:
- WO-A1-2012/095973
- JP-A- 2007 052 698
- JP-A- 2010 503 118
- US-A1- 2013 287 210
- US-A1- 2015 270 958
- US-A1- 2016 299 924
- MATSUDA, NORI et al.: "Towards Secure and Fast Searchable Encryption (1)", Proceedings of the 2012 Symposium on Cryptography and Information Security; 30/01-02/02/2013, 30 January 2012 (2012-01-30), pages 1-6, XP009518769, JAPAN
- MATSUDA, NORI et al.: "Efficient Searchable Encryption and Its Application to Web Services. Multimedia, Distributed, Cooperative, and Mobile Symposium (DICOMO2013", IPSJ Symposium Series, vol. 2013, no. 2, 3 July 2013 (2013-07-03) , pages 2067-2074, XP009511604,

## Description

### Technical Field

The present invention relates to a searchable encryption technology.

### Background Art

The searchable encryption is a technology for searching for encrypted data while it remains encrypted.

In recent years, the searchable encryption has attracted attention as a security technology to protect secret information even from eavesdropping by server administrators in managing data on the Internet, such as cloud services.

A basic flow of the searchable encryption is as set out below:
First, a user who encrypts data (encrypter) generates encrypted data by encrypting data. The user (encrypter) also associates a keyword to search for the encrypted data generated with the encrypted data.

Since the associated keyword is also information that relates to the data, the keyword is encrypted as well. The encrypted keyword is called an encrypted tag. The encrypted data and the encrypted tag are stored in a data center apparatus.

The number of the encrypted tags does not need to be one, and a plurality of encrypted tags may be associated with the encrypted data.

In addition, keywords do not leak from the encrypted tags.

A user who performs a search (searcher) selects a keyword that the user wants to search for, and generates a search query using the keyword and a secret key that the user has.

Since the search query is generated by randomizing the keyword using the secret key, it is difficult to analogize the secret key from the search query itself.

Then, the user (searcher) sends this search query to the data center apparatus, and requests the data center apparatus to perform the search.

The data center apparatus stores the encrypted data and the encrypted tag that the user (encrypter) has requested to store, relating them to each other.

Upon receiving the search query from the user (searcher), the data center apparatus searches for an encrypted tag that includes a keyword that is same as the keyword used to generate the search query from among encrypted tags that the data center apparatus stores.

At this time, the data center apparatus is able to determine whether the keyword of the encrypted tag and the keyword of the search query are identical with each other by performing a special calculation for the searchable encryption, without decrypting the encrypted tag and extracting the keyword.

Then, the data center apparatus returns to the user (searcher), the encrypted data that is associated with the encrypted tag of which keyword has been determined to be identical with that of the search query.

There are two types of key schemes for the searchable encryption: a common key scheme under which the encrypter and the searcher need to have same secret information; and a public key scheme under which anyone can be the encrypter, but only a limited specific user who has secret information can be the searcher.

And, as to realization of the searchable encryption, there are two types of techniques: a method using deterministic encryption; and a method using probabilistic encryption.

The deterministic encryption is an encryption scheme being characterized in that, when encrypting a same keyword, a same encrypted text will be acquired no matter how many times the encryption of the keyword is repeated.

Therefore, the deterministic encryption has a feature that enables a high-speed search by using an acceleration technique that is realized in a conventional database, such as an inverted index.

On the other hand, since frequency of appearance of encrypted data is countable, if a keyword is a family name, for example, contents of the encrypted data may be inferred based on information on population ratio regarding family names generally known, and the like, which is a disadvantage of the deterministic encryption (for example, Non-Patent Literature 2).

By contrast, the probabilistic encryption is an encryption scheme being characterized in that, even if a same keyword is encrypted, a different encrypted text will be generated at every encryption.

Therefore, it is impossible to know an identity of keywords by a simple comparison of encrypted data. For this reason, the probabilistic encryption is characterized by its high security as it does not allow inferring of keywords by counting the frequency of appearance, which is a problem of the deterministic encryption.

On the other hand, since it is impossible to know even the identity of keywords, the acceleration technique realized in the conventional database cannot be used, and thereby the probabilistic encryption has a disadvantage in that searches are slow (for example, Non-Patent Literatures 1, 3, 4, and 5).

As a technique of accelerating the searchable encryption using the probabilistic encryption, there has been an idea proposed to shorten an average response time by caching search results.

This focuses on a feature that a general search is sometimes performed twice or more times with a same keyword. This technique aims to accelerate searches by caching a result of the first search, though the first search takes time, and simply returning the cached result at the second and subsequent searches (for example, Patent Literature 1).

As to the searchable encryption scheme using the probabilistic encryption, there is also a technology to accelerate the searchable encryption by encrypting a bit sequence that is a partial information of a keyword and transmitting the encrypted bit sequence to a data center apparatus (for example, Patent Literature 2).

In the technology according to Patent Literature 2, a part of bit values in the encrypted bit sequence is disclosed, and thereby enables the data center apparatus to use the bit sequence as an index. As a result of this, the technology according to Patent Literature 2 enables acceleration of the searchable encryption. Further in the technology according to Patent Literature 2,additional bit values in the bit sequence that have been concealed is disclosed to the data center apparatus, and thereby enables improvement of speed of the searchable encryption if the amount of the encrypted data registered with the data center apparatus increases and the search speed slows down.

Patent Literature 3 describes an access terminal apparatus which provides a group determination key being a decryption key to a data center apparatus, and then transmits grouping information generated from a keyword of storage target data and having been encrypted to the data center apparatus, with encrypted data of the storage target data and tag data of the encrypted data of the storage target data.

A search server extracting a term for search from a requested search query and decrypting the encrypted index key with a user key which belongs to a user requesting the search query is known from Patent Literature 4.

### Citation List

### Patent Literature

Patent Literature 1: JP 2005-134990 A
Patent Literature 2: WO 2012/095973
Patent Literature 3: US 2013/0287210
Patent Literature 4: US 2016/0299924

### Non-Patent Literature

Non-Patent Literature 1: D. Boneh, G. D. Crescenzo, R. Ostrovsky, G. Persiano, "Public Key Encryption with Keyword Search", EUROCRYPT' 2004, Lecture Notes in Computer Science, Vol. 3027, 2004.

Non-Patent Literature 2: M. Bellare, A. Boldyreva, A. O'Neill, "Deterministic and Efficiently Searchable Encryption", CRYPTO' 2007, Lecture Notes in Computer Science, Vol. 4622, 2007.

Non-Patent Literature 3: J. Katz, A. Sahai, B. Waters, "Predicate Encryption Supporting Disjunctions, Polynomial Equations, and Inner Products", EUROCRYPT 2008, Lecture Notes in Computer Science, Vol. 4965, 2008.

Non-Patent Literature 4: Mitsuhiro Hattori, Takumi Mori, Takashi Ito, Nori Matsuda, Takeshi Yoneda, Kazuo Ohta, "Anonymous HIBE with Wildcards and Its Application to Secure Keyword Search for Group-Oriented Multi-User System", SCIS' 2010, 3A4-2, the Institute of Electronics, Information and Communication Engineers, 2010.

Non-Patent Literature 5: Tatsuaki Okamoto, Katsuyuki Takashima, "Hierarchical Predicate Encryption for Inner-Products", ASIACRYPT' 2009, Lecture Notes in Computer Science, Vol. 5912, 2009.

### Summary of Invention

### Technical Problem

According to Patent Literature 2 and Patent Literature 3, a bit sequence to be used as an index by a data center apparatus is encrypted using a public key scheme. For this reason, there is a problem that a decryption process requires time in the data center apparatus decrypting a part of bit values in the bit sequence.

The main objective of the present invention is to solve this problem. More specifically, the main objective of the present invention is to accelerate a search process by accelerating the decryption process of the bit sequence to be used as the index.

### Solution to Problem

According to the present invention, there are provided method, apparatus and computer program according to the independent claims.

A data processing apparatus, a data processing method and a data processing program according to the present invention are specified in the independent claims. The data processing apparatus at least includes:
an index bit sequence generation unit to generate a bit sequence to be used as an index in searching for encrypted data to be stored in a data storage apparatus as an index bit sequence, associating the index bit sequence with the encrypted data;
an index bit sequence encryption unit to encrypt a plurality of bit values in the index bit sequence, using an index key of a common key scheme; and
a transmission unit to transmit to the data storage apparatus, an encrypted index bit sequence and the encrypted data, the encrypted index bit sequence being the index bit sequence after the plurality of bit values is encrypted by the index bit sequence encryption unit.

### Advantageous Effects of Invention

The present invention encrypts an index bit sequence using an index key of a common key scheme. For this reason, the present invention enables acceleration of a decryption process of an index bit sequence, and thereby enables acceleration of a search process.

### Brief Description of Drawings

Fig. 1 is a diagram that illustrates a configuration example of a searchable encryption system according to a first embodiment;
Fig. 2 is a diagram that illustrates the searchable encryption system according to the first embodiment;
Fig. 3 is a diagram that illustrates the searchable encryption system according to the first embodiment;
Fig. 4 is a diagram that illustrates the searchable encryption system according to the first embodiment;
Fig. 5 is a diagram that illustrates the searchable encryption system according to the first embodiment;
Fig. 6 is a diagram that illustrates an example of a functional configuration of an access terminal apparatus according to the first embodiment;
Fig. 7 is a diagram that illustrates an example of a functional configuration of a data center apparatus according to the first embodiment;
Fig. 8 is a flowchart that illustrates an operational example of the access terminal apparatus according to the first embodiment;
Fig. 9 is a flowchart that illustrates an operational example of the access terminal apparatus according to the first embodiment;
Fig. 10 is a flowchart that illustrates an operational example of the access terminal apparatus according to the first embodiment;
Fig. 11 is a flowchart that illustrates an operational example of the data center apparatus according to the first embodiment;
Fig. 12 is a flowchart that illustrates an operational example of the data center apparatus according to the first embodiment;
Fig. 13 is a flowchart that illustrates an operational example of the data center apparatus according to the first embodiment;
Fig. 14 is a diagram that illustrates an example of a hardware configuration of the access terminal apparatus according to the first embodiment; and
Fig. 15 is a diagram that illustrates an example of a hardware configuration of the data center apparatus according to the first embodiment.

### Description of Embodiment

### First embodiment.

In the present embodiment, explanation is given on a scheme to accelerate a searchable encryption by encrypting a bit sequence to be used as an index in searching for encrypted data (hereinafter, an index bit sequence), and adding the index bit sequence acquired by the encryption (hereinafter referred to as an encrypted index bit sequence) to an encrypted tag.

In the present first embodiment, explanation is given further on a scheme to safely accelerate the searchable encryption by gradually disclosing encrypted bit values in the encrypted index bit sequence if a search process slows down due to increase of the amount of the encrypted data registered with a data center apparatus.

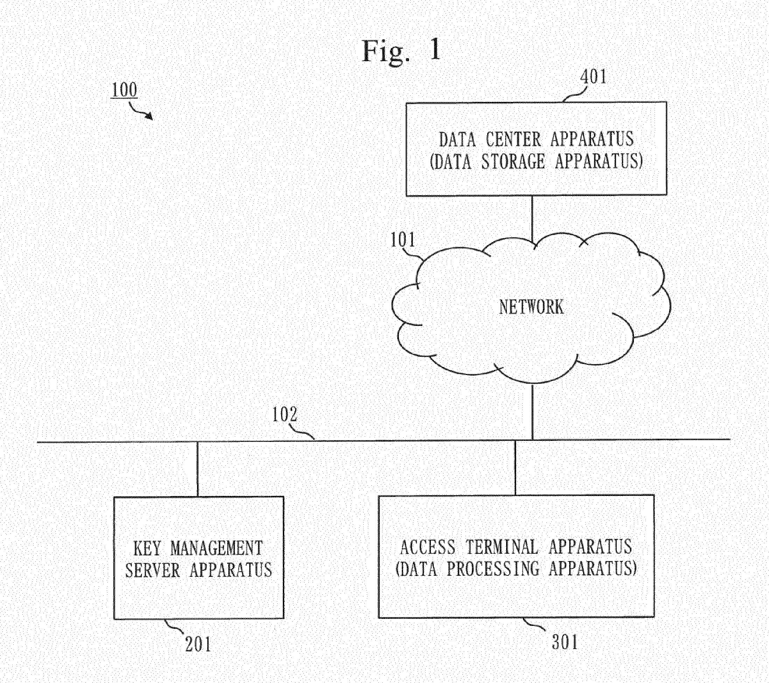

Fig. 1 is a diagram that illustrates a configuration example of a searchable encryption system 100.

The searchable encryption system 100 includes a key management server apparatus 201, an access terminal apparatuses 301, and a data center apparatus 401.

The key management server apparatus 201 and the access terminal apparatuses 301 are connected to a LAN (Local Area Network) 102.

The LAN 102 is connected to the data center apparatus 401 through a network 101.

The access terminal apparatus 301 is an example of a data processing apparatus, and the data center apparatus 401 is an example of a data storage apparatus.

Fig. 1 illustrates only a single access terminal apparatus 301. However, the searchable encryption system 100 may include a plurality of access terminal apparatuses 301.

The key management server apparatus 201 generates an encryption key to be used to encrypt storage target data that is subject to storage in the data center apparatus 401 and an encryption key to be used to encrypt a tag.

The key management server apparatus 201 may also generate a plurality of index keys to be used to encrypt an index bit sequence.

The access terminal apparatus 301 is a PC (Personal Computer) utilized by a user.

The access terminal apparatus 301 generates the storage target data, and encrypts the storage target data generated. The access terminal apparatus 301 also stores in the data center apparatus 401, the encrypted data acquired by the encryption. The access terminal apparatus 301 also requests the data center apparatus 401 to search for encrypted data. Then, the access terminal apparatus 301 receives from the data center apparatus 401, the encrypted data acquired, and decrypts the encrypted data received.

The data center apparatus 401 is a server apparatus having a large-capacity storage device to store encrypted data.

Since the storage target data is stored in an encrypted state, the data center apparatus 401 is not able to refer to a content of the storage target data.

The network 101 is a communication channel that connects the LAN 102 and the data center apparatus 401.

For example, the Internet, and the like is a typical example of the network 101.

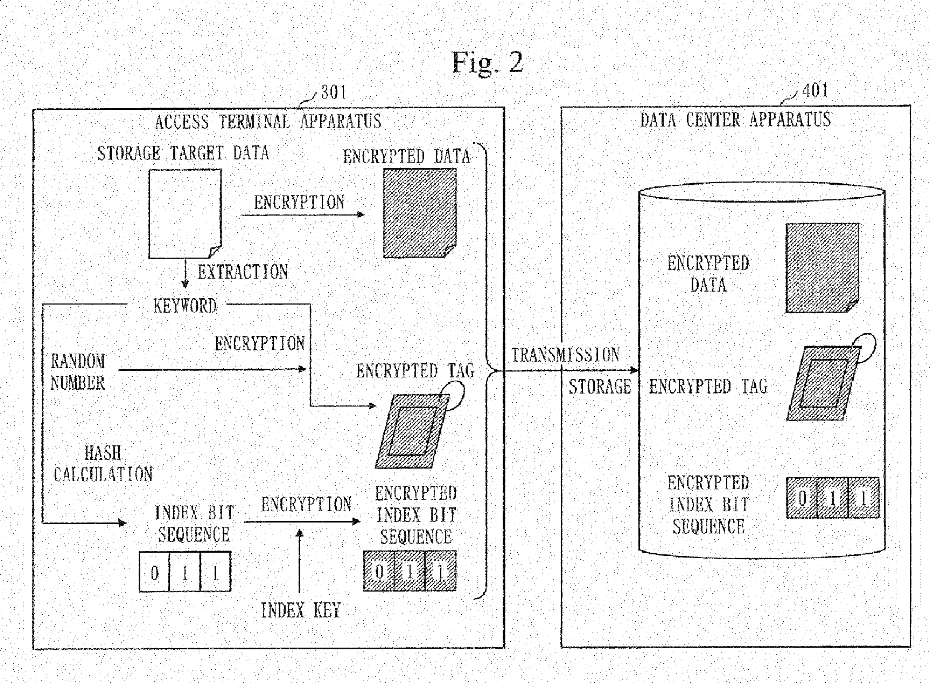

Here, referring to Fig. 2 to Fig. 5, the outline of the searchable encryption system 100 according to the present embodiment is explained.

As illustrated in Fig. 2, the access terminal apparatus 301 encrypts storage target data to generate encrypted data.

The access terminal apparatus 301 also extracts a keyword from the storage target data, and generates an encrypted tag by encrypting the extracted keyword using a random number and an encryption key.

The encrypted tag is data to be compared with in searching for the encrypted data.

The access terminal apparatus 301 also generates an index bit sequence by performing a predetermined calculation for the keyword of the storage target data. For example, the access terminal apparatus 301 generates the index bit sequence by performing a hash calculation for the keyword. The access terminal apparatus 301 may also generates the index bit sequence by implementing encryption by a deterministic encryption scheme using an encryption key in addition to the hash calculation.

Then, the access terminal apparatus 301 encrypts the index bit sequence. More specifically, the access terminal apparatus 301 encrypts the index bit sequence using an index key of the common key scheme.

Then, the access terminal apparatus 301 transmits to the data center apparatus 401, the encrypted data, the encrypted tag, and the encrypted index bit sequence acquired by encrypting the index bit sequence.

The data center apparatus 401 receives the encrypted data, the encrypted tag, and the encrypted index bit sequence. Then, the data center apparatus 401 stores the encrypted data, the encrypted tag, and the encrypted index bit sequence relating them to each other.

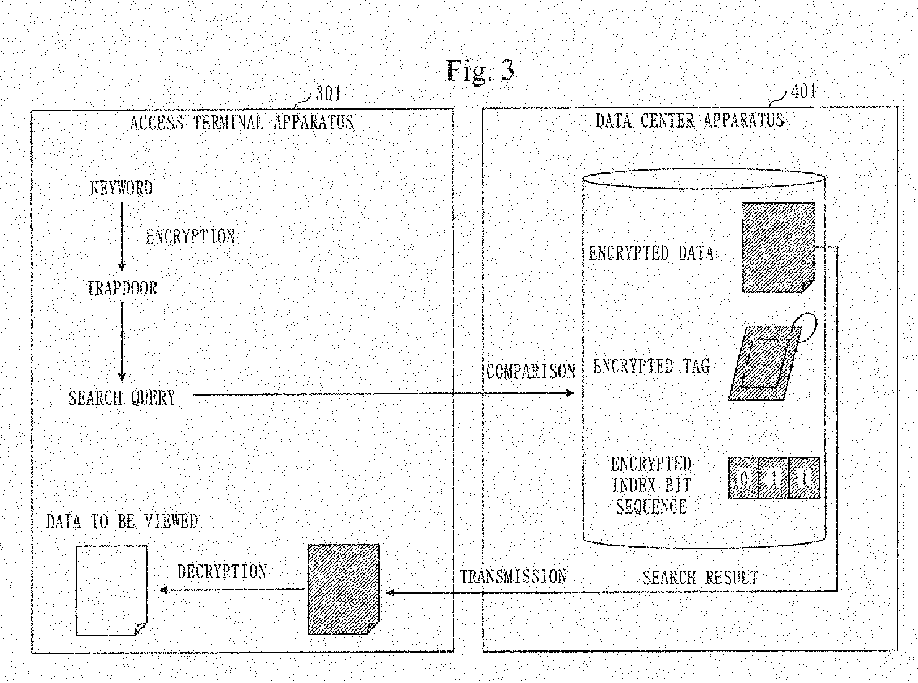

As illustrated in Fig. 3, in searching for the encrypted data stored in the data center apparatus 401, the access terminal apparatus 301 generates a trapdoor by encrypting a keyword subject to the search.

Then, the access terminal apparatus 301 transmits to the data center apparatus 401, a search query that includes the trapdoor.

The access terminal apparatus 301 that registers the encrypted data with the data center apparatus 401 and the access terminal apparatus 301 that requests the data center apparatus 401 to search for the encrypted data do not need to be the same.

If the data center apparatus 401 receives the search query from the access terminal apparatus 301, the data center apparatus 401 compares the trapdoor included in the search query with encrypted tags.

Then, the data center apparatus 401 specifies an encrypted tag that has been generated from the keyword that is same as the keyword used to generate the trapdoor based on a result of the comparison, and extracts encrypted data being related to the specified tag data. Next, the data center apparatus 401 transmits the extracted encrypted data to the access terminal apparatus 301 from which the search query has been transmitted.

If an amount of the encrypted data stored in the data center apparatus 401 increases, search efficiency decreases, and search speed of the encrypted data slows down.

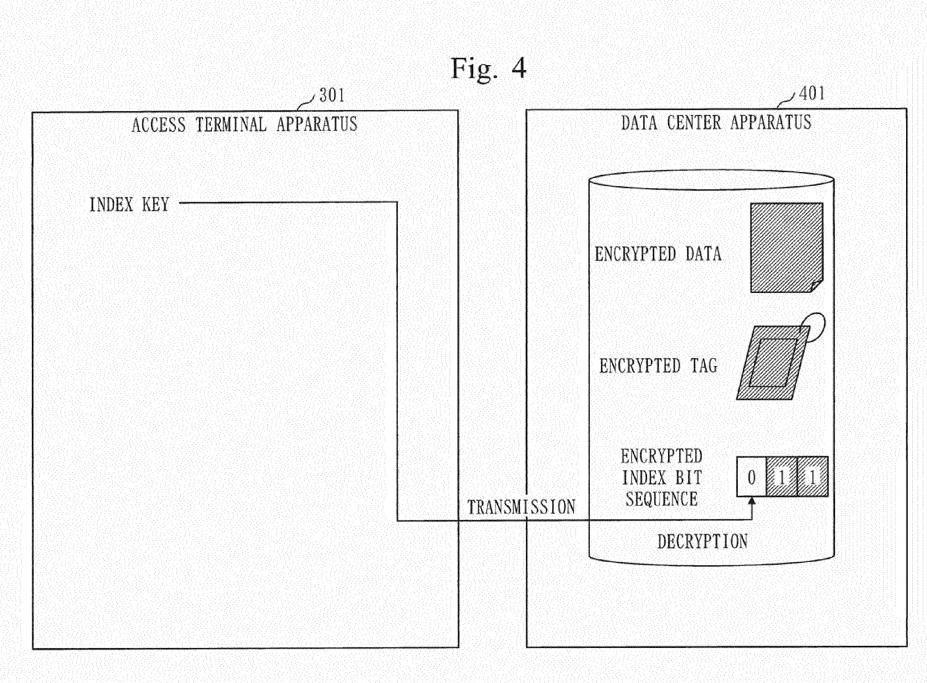

In this case, as illustrated in Fig. 4, the access terminal apparatus 301 that has requested the encrypted data be stored discloses to the data center apparatus 401, a part of bit values in the encrypted index bit sequence. The access terminal apparatus 301 may gradually disclose the bit values by one bit each time, or may gradually disclose the bit values by the plurality of bits each time. The access terminal apparatus 301 may also disclose all of the bit values at a time.

In specific, the bit values are disclosed by the access terminal apparatus 301 by transmitting to the data center apparatus 401, the index key used to generate the encrypted index bit sequence. Transmission of this index key is implemented by encrypted communication.

The data center apparatus 401 receives the index key transmitted from the access terminal apparatus 301. Then, the data center apparatus 401 decrypts the encrypted bit value in the encrypted index bit sequence using the index key received.

For example, as illustrated in Fig. 2, assume that values of the encrypted index bit sequence before encryption (that is, values of the index bit sequence) being related to the encrypted data is "011".

Assume that the access terminal apparatus 301 transmits to the data center apparatus 401, the index key for releasing a bit value of the most significant bit.

The data center apparatus 401 uses the index key received, and acquires "0" that is the bit value of the most significant bit of the index bit sequence "011".

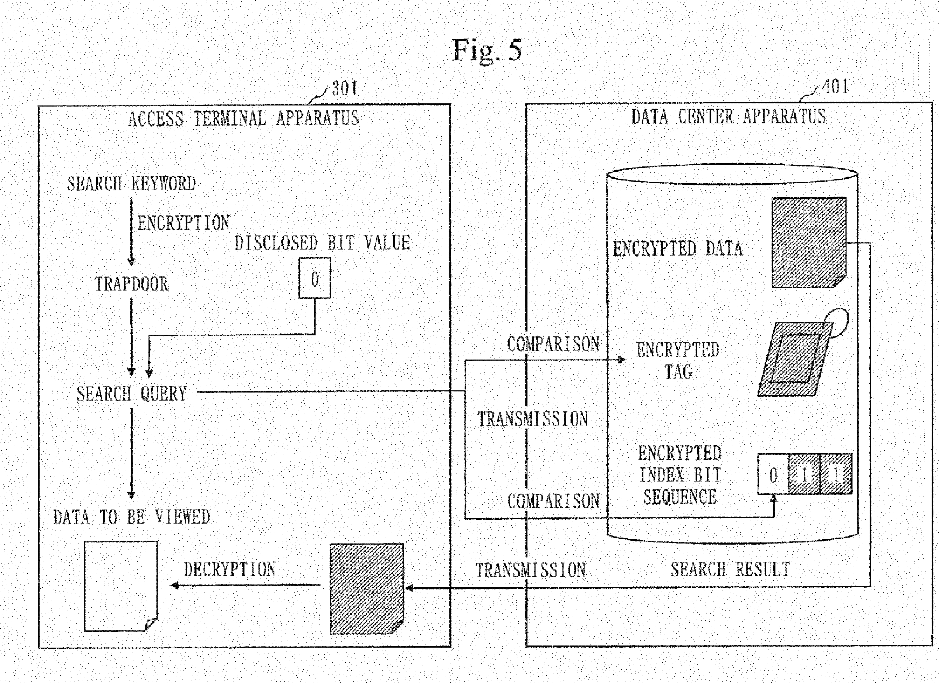

As illustrated in Fig. 5, the access terminal apparatus 301 transmits to the data center apparatus 401, the search query that includes the trapdoor and "0" that is the bit value of the most significant bit in the encrypted index bit sequence.

The data center apparatus 401 selects an encrypted tag being related to the encrypted index bit sequence of which bit value of the most significant bit is "0", and compares only the selected encrypted tag with the trapdoor.

If the search efficiency further decreases, the access terminal apparatus 301 discloses to the data center apparatus 401, the bit value in a lower bit position in the encrypted index bit sequence. By doing this, disclosing the bit value in the encrypted bit sequence enables improvement of the search efficiency even if the search efficiency decreases.

According to the present embodiment, the index bit sequence is encrypted by the common key scheme. For this reason, the data center apparatus 401 is able to decrypt the bit value in the index bit sequence at high speed.

And also, according to the present embodiment, the access terminal apparatus 301 implements encryption by the deterministic encryption scheme in a process of generating the index bit sequence. For this reason, even if all the bit values in the encrypted index bit sequence are disclosed to the data center apparatus 401, there is no risk that the keyword is leaked to the data center apparatus 401. For example, if an index bit sequence is generated by the hash calculation for a keyword without using an encryption key, anyone can perform the hash calculation, and accordingly anyone can generate the index bit sequence. For this reason, there is a possibility that a hash value that is same as a hash value stored in the data center apparatus 401 appears by randomly calculating the hash value for the keyword, and at that time, the keyword from which the index bit sequence has been generated can be acquired. However, since the index bit sequence according to the present embodiment is the index bit sequence that is generated by implementing encryption by the deterministic encryption scheme, there is no need to worry about leakage of keywords.

The outline of operations by the searchable encryption system 100 according to the present embodiment is as described above. An internal configuration of the access terminal apparatus 301 and the data center apparatus 401 is explained below.

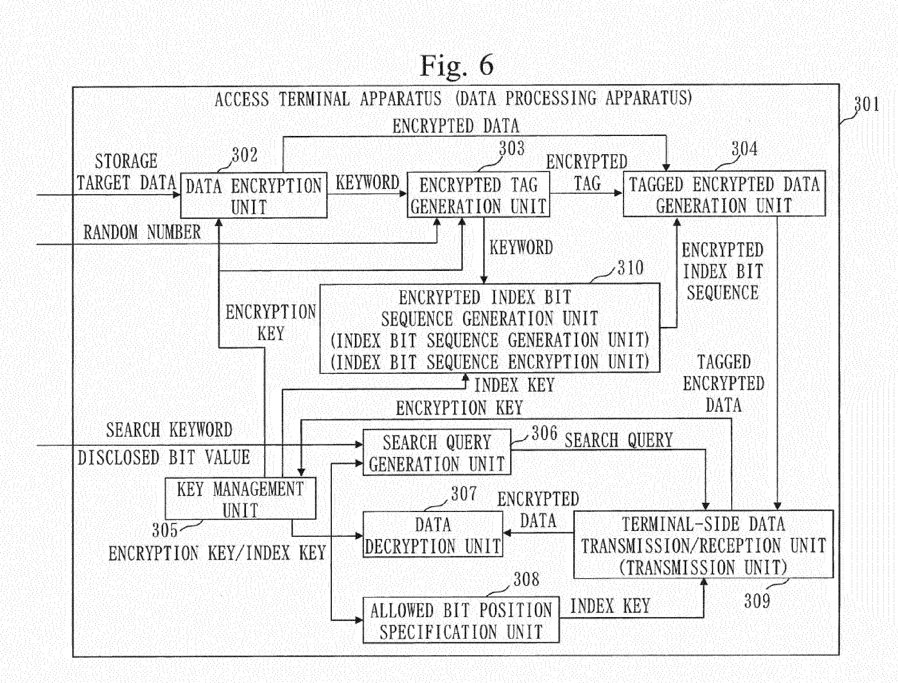

Fig. 6 illustrates an example of a functional configuration of the access terminal apparatus 301.

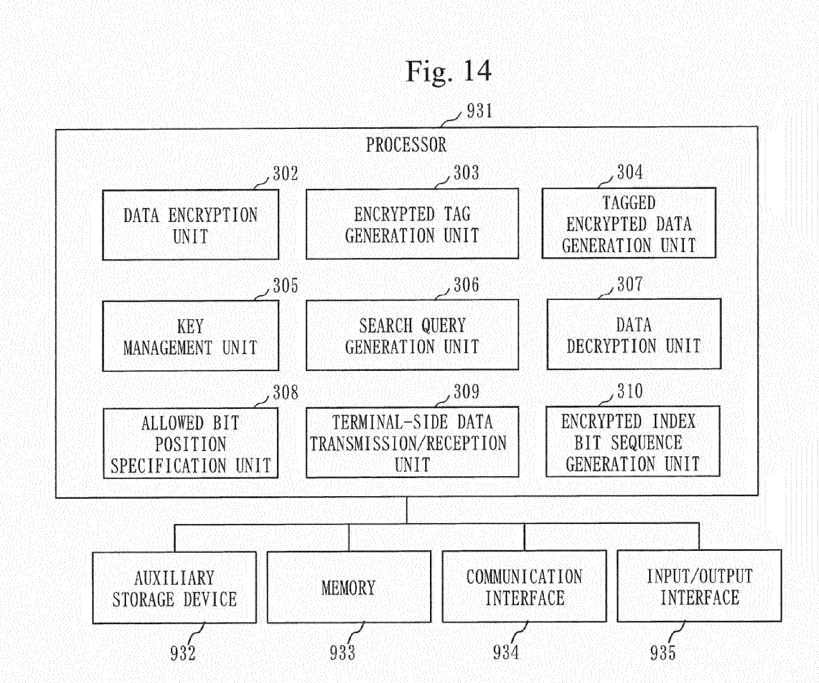

And, Fig. 14 illustrates an example of a hardware configuration of the access terminal apparatus 301.

As illustrated in Fig. 6, the access terminal apparatus 301 includes a data encryption unit 302, an encrypted tag generation unit 303, a tagged encrypted data generation unit 304, a key management unit 305, a search query generation unit 306, a data decryption unit 307, an allowed bit position specification unit 308, a terminal-side data transmission/reception unit 309, and an encrypted index bit sequence generation unit 310.

The access terminal apparatus 301 according to the present embodiment is a computer.

As illustrated in Fig. 14, the access terminal apparatus 301 includes, as hardware, a processor 931, an auxiliary storage device 932, a memory 933, a communication interface 934, and an input/output interface 935.

In the auxiliary storage device 932, a program to realize functions of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 is stored.

The program is loaded from the auxiliary storage device 932 to the memory 933.

Then, the processor 931 executes the program, and performs operation of the data encryption unit 302, the encrypted tag generation unit 303, the tagged encrypted data generation unit 304, the key management unit 305, the search query generation unit 306, data decryption unit 307, the allowed bit position specification unit 308, the terminal-side data transmission/reception unit 309, and the encrypted index bit sequence generation unit 310 as described below.

Fig. 14 schematically illustrates a situation in which the processor 931 executes the program to realize the functions of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310.

Operations implemented by the access terminal apparatus 301 corresponds to a data processing method. And the program to realize the functions of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 corresponds to a data processing program.

The communication interface 934 communicates with an external apparatus.

The input/output interface 935 accepts instructions from a user of the access terminal apparatus 301, and also presents information to the user of the access terminal apparatus 301.

Next, details of the functional configuration of the access terminal apparatus 301 illustrated in Fig. 6 are explained.

The data encryption unit 302 receives from a user or an application, the storage target data to be stored in the data center apparatus 401. The data encryption unit 302 also encrypts the storage target data using the common key encryption, and acquires the encrypted data of the storage target data.

Hereinafter, the encryption key used by the data encryption unit 302 to encrypt the storage target data is referred to as an encryption key eka.

The data encryption unit 302 also extracts from the storage target data, a keyword to be used for searching later. The data encryption unit 302 may also receive from the user, a keyword to be associated with the data.

The encrypted tag generation unit 303 generates the encrypted tag by encrypting the keyword that is associated with the storage target data by the data encryption unit 302 using the random number and the encryption key.

Hereinafter the encryption key used by the encrypted tag generation unit 303 to encrypt the keyword is referred to as an encryption key ekb.

The encrypted index bit sequence generation unit 310 generates the index bit sequence by performing the predetermined calculation for the keyword of the storage target data.

The encrypted index bit sequence generation unit 310 encrypts the index bit sequence using the index key.

According to the present embodiment, the encrypted index bit sequence generation unit 310 encrypts each of the plurality of bit values in the index bit sequence using different index keys. For example, if the index bit sequence consists of three bits, the encrypted index bit sequence generation unit 310 uses three index keys.

The index key used by the encrypted index bit sequence generation unit 310 to encrypt the index bit sequence is hereinafter referred to as an index key ik. Hereinafter, a number to indicate the bit position corresponding to the index key ik is added after "ik". For example, if the index bit sequence consists of three bits, the index key used to encrypt a bit value of the most significant bit is written as an index key ik1. And, the index key used to encrypt a bit value of the least significant bit is written as an index key ik3. If written as an "index key ik" without any number after "ik", it means all of the plurality of index keys or a part of the plurality of index keys.

The encrypted index bit sequence generation unit 310 generates the plurality of index bit sequences corresponding to the plurality of encrypted data if the plurality of encrypted data is to be stored in the data center apparatus 401. And, the encrypted index bit sequence generation unit 310 is able to use a set of common index keys to encrypt the plurality of index bit sequences of the plurality of encrypted data.

In other words, the encrypted index bit sequence generation unit 310 encrypts the bit values in a same bit position of the plurality of index bit sequences, using a same index key. For example, if all of the index bit sequences consist of three bits, the encrypted index bit sequence generation unit 310 encrypts bit values of the most significant bit in all of the index bit sequences, using the index key ik1. The encrypted index bit sequence generation unit 310 also encrypts bit values of the least significant bit in all of the index bit sequences, using the index key ik3.

By doing this, it is possible to disclose the bit values of the most significant bit in the plurality of encrypted index bit sequences of the plurality of encrypted data only by the allowed bit position specification unit 308, which will be described below, transmitting the index key ik1 to the data center apparatus 401.

The encrypted index bit sequence generation unit 310 may use a set of different index keys to encrypt each of the plurality of index bit sequences.

According to the present embodiment, the encrypted index bit sequence generation unit 310 encrypts each of the plurality of bit values in the index bit sequence using different index keys. However, the encrypted index bit sequence generation unit 310 may encrypt the plurality of bit values in the index bit sequence, using the fewer number of index keys than the number of bits in the index bit sequence. In specific, if the index bit sequence consists of three bits, the encrypted index bit sequence generation unit 310 may use one or two index key(s).

The encrypted index bit sequence generation unit 310 also encrypts the plurality of bit values in the index bit sequence by an encryption scheme under which the encrypted bit values in the bit positions other than an allowed bit position, which will be described below, are not decrypted with the index key used to encrypt the bit value in the allowed bit position.

The encrypted index bit sequence generation unit 310 corresponds to an index bit sequence generation unit and an index bit sequence encryption unit. A process implemented by the encrypted index bit sequence generation unit 310 corresponds to an index bit sequence generation process and an index bit sequence encryption process.

The tagged encrypted data generation unit 304 generates tagged encrypted data, combining the encrypted data generated by the data encryption unit 302, the encrypted tag generated by the encrypted tag generation unit 303, and the encrypted index bit sequence generated by the encrypted index bit sequence generation unit 310.

Then the tagged encrypted data generation unit 304 outputs the tagged encrypted data to the terminal-side data transmission/reception unit 309.

The key management unit 305 manages the encryption key eka and the encryption key ekb.

More specifically, the key management unit 305 stores the encryption key eka and the encryption key ekb that are generated by the key management server apparatus 201 in the auxiliary storage device 932.

The key management unit 305 also generates the plurality of index keys ik (ik1, ik2, ik3...) from the encryption key eka or the encryption key ekb, and stores in the auxiliary storage device 932, the plurality of index keys ik generated. The key management unit 305 may generates the index key ik from the encryption key eka or the encryption key ekb every time the index key ik is needed, instead of storing the plurality of index keys ik in the auxiliary storage device 932.

The key management unit 305 may also store in the auxiliary storage device 932, the index key ik that is generated by the key management server apparatus 201 independently of the encryption key eka and the encryption key ekb.

The key management unit 305 also outputs the encryption key ekb in order for the search query generation unit 306 to generate the search query.

The key management unit 305 also outputs the encryption key eka to the data decryption unit 307 in order for the data decryption unit 307 to decrypt the encrypted data.

The key management unit 305 also outputs to the allowed bit position specification unit 308, the index key ik corresponding to the bit value subject to disclosure in order to disclose a specific bit value within the encrypted index bit sequence.

The search query generation unit 306 generates the trapdoor by encrypting the search keyword designated by the user with the encryption key ekb. Then the search query generation unit 306 generates a search query that includes the trapdoor, and outputs the search query to the terminal-side data transmission/reception unit 309.

If there is the bit value that has been disclosed, the search query generation unit 306 generates a search query that includes the trapdoor and the bit value that has been disclosed, and outputs the search query to the terminal-side data transmission/reception unit 309.

If there is the bit value that has been disclosed, the search query generation unit 306 may generate the encrypted index bit sequence of the search keyword using the encrypted index bit sequence generation unit 310, generate the search query that includes the trapdoor and the encrypted index bit sequence, and output the search query to the terminal-side data transmission/reception unit 309. In this case, the data center apparatus 401 is able to acquire from the encrypted index bit sequence, the bit value that has been disclosed, using the index key ik that has been disclosed.

The data decryption unit 307 decrypts encrypted data received from the data center apparatus 401 using the encryption key eka.

The allowed bit position specification unit 308 specifies the allowed bit position.

The allowed bit position is the bit position the bit value in which is to be disclosed by releasing encryption, among the plurality of bit positions in the encrypted index bit sequence.

The allowed bit position specification unit 308 may specify the allowed bit position in accordance with user's instructions, or may specify the allowed bit position in accordance with a predetermined algorithm. The allowed bit position specification unit 308 may gradually specify the allowed bit position by one bit each time, or may specify the allowed bit positions by two or more bits at a time. The allowed bit position specification unit 308 may also specify the allowed bit positions for all bits in the encrypted index bit sequence at a time. If the allowed bit position specification unit 308 gradually specifies the allowed bit positions, the allowed bit position specification unit 308 specifies the allowed bit positions in order starting from the most significant bit.

The allowed bit position specification unit 308 acquires from the key management unit 305, the index key ik corresponding to the allowed bit position. In other words, the allowed bit position specification unit 308 acquires from the key management unit 305, the index key ik used to encrypt the bit value in the allowed bit position. Then, the allowed bit position specification unit 308 outputs the index key ik acquired to the terminal-side data transmission/reception unit 309.

The terminal-side data transmission/reception unit 309 receives from the key management server apparatus 201, the encryption key eka and the encryption key ekb. There is a case where the terminal-side data transmission/reception unit 309 receives from the key management server apparatus 201, the plurality of index keys ik.

The terminal-side data transmission/reception unit 309 transmits to the data center apparatus 401, the tagged encrypted data.

The terminal-side data transmission/reception unit 309 also receives from the data center apparatus 401, the encrypted data that is a search result.

The terminal-side data transmission/reception unit 309 also transmits to the data center apparatus 401, the index key ik in order to disclose the bit value in the allowed bit position.

The terminal-side data transmission/reception unit 309 corresponds to a transmission unit. And, a process implemented by the terminal-side data transmission/reception unit 309 corresponds to a transmission process.

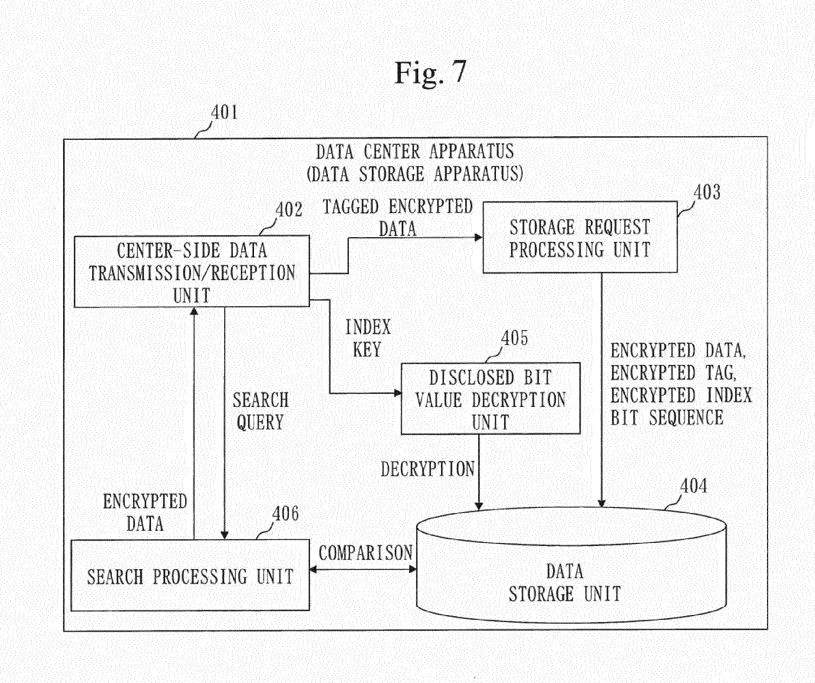

Fig. 7 illustrates an example of a functional configuration of the data center apparatus 401.

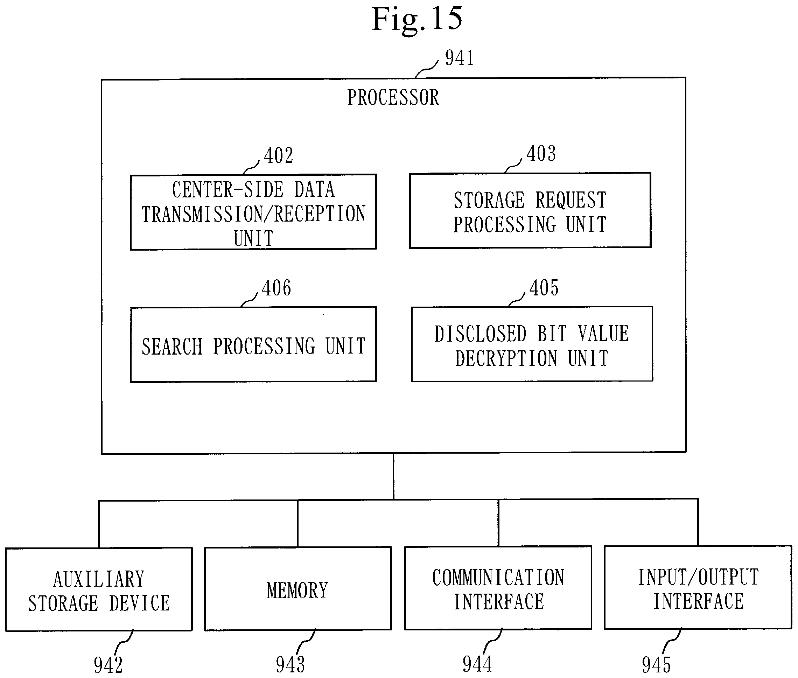

Fig. 15 illustrates an example of a hardware configuration of the data center apparatus 401.

As illustrated in Fig. 7, the data center apparatus 401 includes a center-side data transmission/reception unit 402, a storage request processing unit 403, a data storage unit 404, a disclosed bit value decryption unit 405, and a search processing unit 406.

The data center apparatus 401 according to the present embodiment is a computer.

As illustrated in Fig. 15, the data center apparatus 401 includes, as hardware, a processor 941, an auxiliary storage device 942, a memory 943, a communication interface 944, and input/output interface 945.

In the auxiliary storage device 942, a program to realize functions of the center-side data transmission/reception unit 402, the storage request processing unit 403, the disclosed bit value decryption unit 405, and the search processing unit 406 is stored.

The program is loaded from the auxiliary storage device 942 to the memory 943.

Then, the processor 941 executes the program, and performs operation of the center-side data transmission/reception unit 402, the storage request processing unit 403, the disclosed bit value decryption unit 405, and the search processing unit 406 as described below.

Fig. 14 schematically illustrates a situation in which the processor 941 executes the program to realize the functions of the center-side data transmission/reception unit 402, the storage request processing unit 403, the disclosed bit value decryption unit 405, and the search processing unit 406.

The data storage unit 404 is realized by the auxiliary storage device 942.

The communication interface 944 communicates with an external apparatus.

The input/output interface 945 accepts instructions from a user of the data center apparatus 401, and presents information to the user of the data center apparatus 401.

Next, details of a functional configuration of the data center apparatus 401 illustrated in Fig. 7 is explained.

The center-side data transmission/reception unit 402 receives the tagged encrypted data from the access terminal apparatus 301.

The center-side data transmission/reception unit 402 also receives the index query from the access terminal apparatus 301, and transmits the encrypted data as a response thereto.

The center-side data transmission/reception unit 402 receives the index key ik from the access terminal apparatus 301.

The storage request processing unit 403 analyzes the tagged encrypted data received, and decomposes the tagged encrypted data into the encrypted data, the encrypted tag, and the encrypted index bit sequence. Then, the storage request processing unit 403 stores in the data storage unit 404, the encrypted data, the encrypted tag, and the encrypted index bit sequence relating them to each other.

The data storage unit 404 stores the encrypted data, the encrypted tag, and the encrypted index bit sequence relating them to each other.

The disclosed bit value decryption unit 405 decrypts a bit value in the allowed bit position in the encrypted index bit sequence using the index key ik received.

The search processing unit 406 implements a comparison process between the search query received from the access terminal apparatus 301 and the encrypted tag in the data storage unit 404.

The search processing unit 406 determines, by this comparison process, whether the keyword included in the tag and the keyword included in the search query are identical.

After that, the search processing unit 406 acquires from the data storage unit 404, encrypted data associated with the tag that has been hit in search. And the search processing unit 406 returns the encrypted data acquired to the access terminal apparatus 301 through the center-side data transmission/reception unit 402.

### *** Description of Operation ***

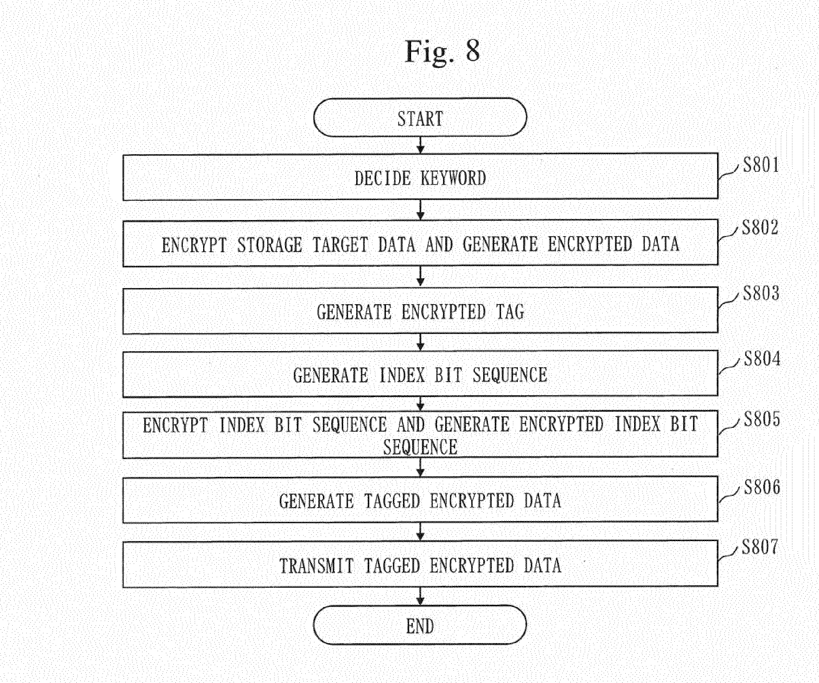

Next, based on Fig. 8, an encryption process of data by the access terminal apparatus 301 is explained.

First, in step S 801, the data encryption unit 302 accepts storage target data from a user, and determines a keyword to be associated with the storage target data.

The keyword may be extracted from the storage target data by the data encryption unit 302, or may be specified by the user.

And also, one keyword may be associated with the storage target data, or a plurality of keywords may be associated with the storage target data. Hereinafter, to simplify an explanation, assume that one keyword is associated with the storage target data.

Next, in step S802, the data encryption unit 302 generates encrypted data by encrypting the storage target data.

More specifically, the data encryption unit 302 acquires an encryption key eka from the key management unit 305, and encrypts the storage target data using the encryption key eka.

The data encryption unit 302 outputs the keyword to the encrypted tag generation unit 303. The data encryption unit 302 outputs the encrypted data to the tagged encrypted data generation unit 304.

Next, in step S803, the encrypted tag generation unit 303 generates an encrypted tag.

More specifically, the encrypted tag generation unit 303 acquires an encryption key ekb from the key management unit 305, and generates the encrypted tag by encrypting the keyword using a random number and the encryption key ekb.

The encrypted tag generation unit 303 outputs the keyword to the encrypted index bit sequence generation unit 310. The encrypted tag generation unit 303 outputs the encrypted tag to the tagged encrypted data generation unit 304.

Next, in step S804, the encrypted index bit sequence generation unit 310 generates an index bit sequence by performing a predetermined calculation for the keyword.

The encrypted index bit sequence generation unit 310, for example, generates the index bit sequence by performing a hash calculation for the keyword. The encrypted index bit sequence generation unit 310 may also generate the index bit sequence by implementing encryption by the deterministic encryption scheme in addition to the hash calculation.

Next, in step S805, the encrypted index bit sequence generation unit 310 generates an encrypted index bit sequence by encrypting the index bit sequence.

More specifically, the encrypted index bit sequence generation unit 310 acquires an index key ik of the common key scheme from the key management unit 305, and encrypts the index bit sequence using the index key ik.

The encrypted index bit sequence generation unit 310 outputs the encrypted index bit sequence to the tagged encrypted data generation unit 304.

Next, in step S806, the tagged encrypted data generation unit 304 generates tagged encrypted data by combining the encrypted data, the encrypted tag, and the encrypted index bit sequence together.

The tagged encrypted data generation unit 304 outputs the tagged encrypted data generated to the terminal-side data transmission/reception unit 309.

Next, in step S807, the terminal-side data transmission/reception unit 309 transmits the tagged encrypted data to the data center apparatus 401.

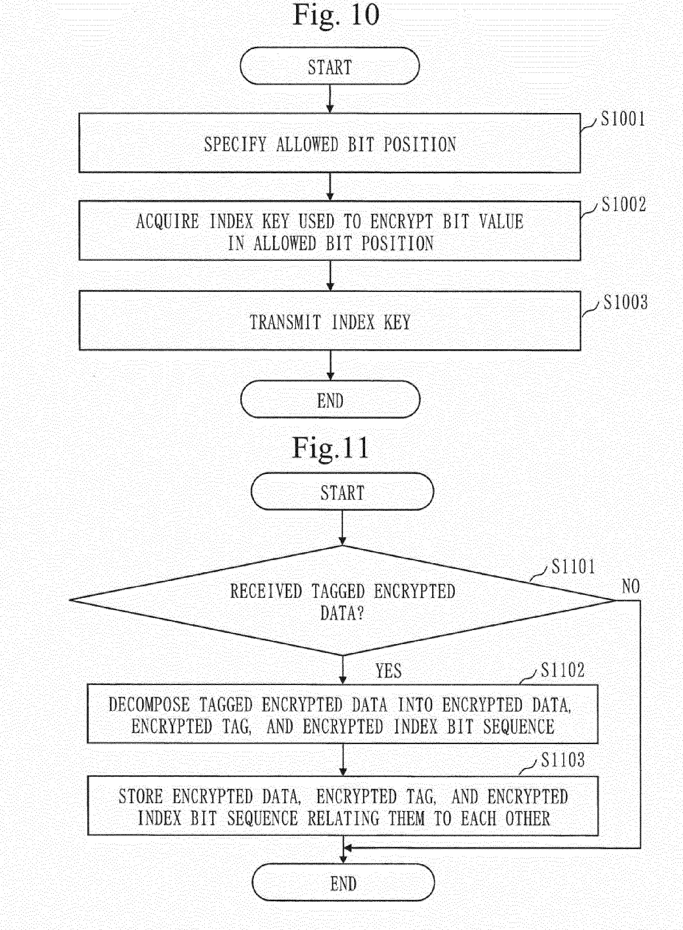

Next, based on Fig. 11, a storage process of the encrypted data by the data center apparatus 401 is explained.

First, if the center-side data transmission/reception unit 402 receives the tagged encrypted data (YES in step S1101), in step S1102, the storage request processing unit 403 decomposes the tagged encrypted data into the encrypted data, the encrypted tag, and the encrypted index bit sequence.

Then, in step S1103, the storage request processing unit 403 stores in the data storage unit 404, the encrypted data, the encrypted tag, and the encrypted index bit sequence relating them to each other.

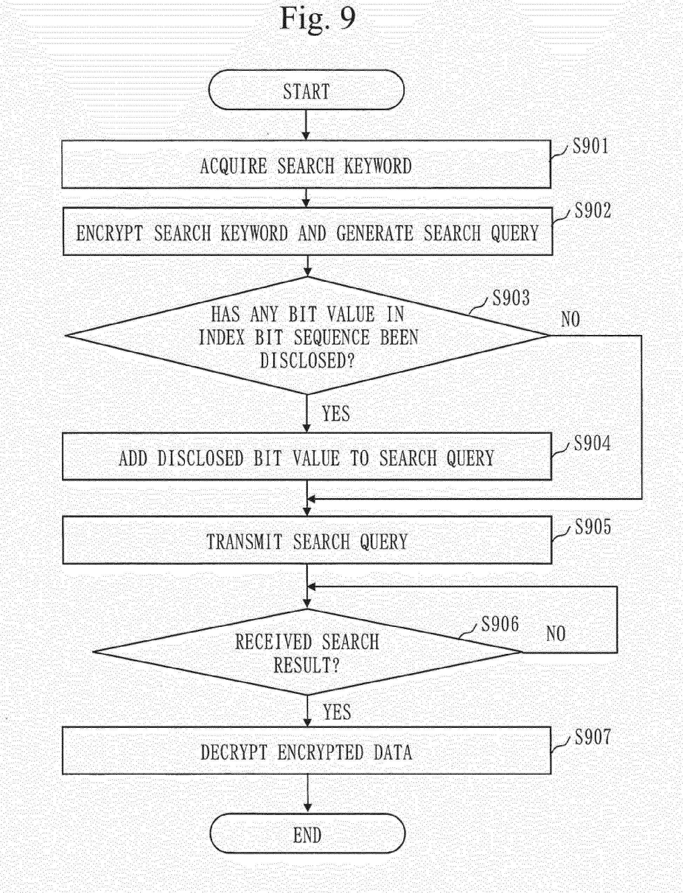

Next, based on Fig. 9, a search requesting process by the access terminal apparatus 301 is explained.

First in step S901, the search query generation unit 306 acquires a search keyword from a user who operates the access terminal apparatus 301.

Next, in step S902, the search query generation unit 306 generates a search query by encrypting the search keyword.

More specifically, the search query generation unit 306 acquires the encryption key ekb from the key management unit 305, and encrypts the search keyword using the encryption key ekb. Then, the search query generation unit 306 generates the search query that includes a trapdoor acquired by the encryption.

Next, in step S903, the search query generation unit 306 determines whether any of bit values in the index bit sequence has been disclosed or not.

If any of the bit values in the index bit sequence has been disclosed (YES in step S903), in step S904, the search query generation unit 306 adds to the search query, the bit value that has been disclosed.

Next, in step S905, the terminal-side data transmission/reception unit 309 transmits the search query to the data center apparatus 401.

Next, in step S906, if the terminal-side data transmission/reception unit 309 receives a search result (YES in step S906), the data decryption unit 307 acquires the encryption key eka from the key management unit 305, and decrypts the encrypted data included in the search result using the encryption key eka (step S907).

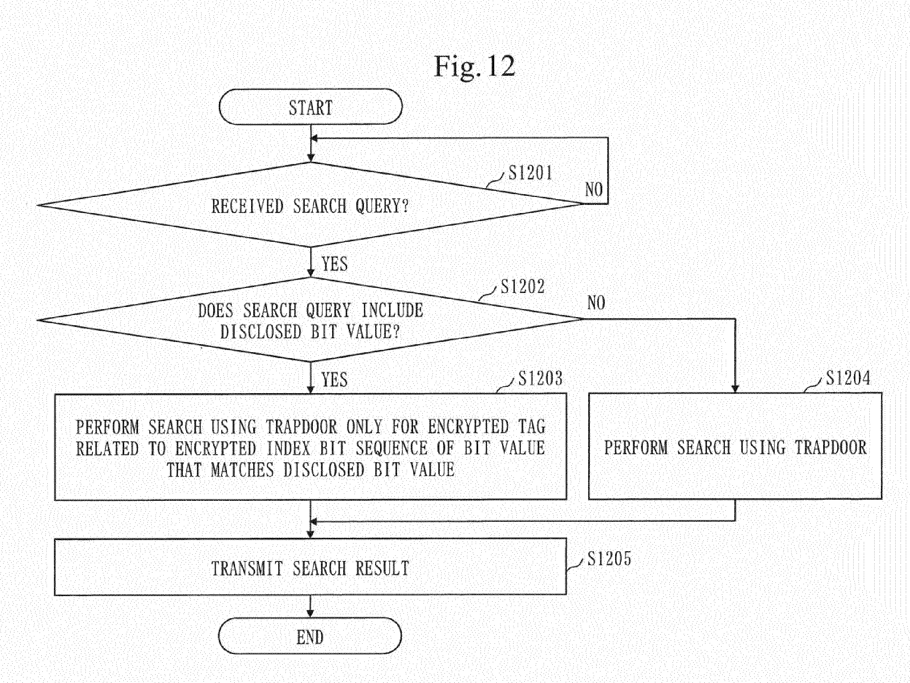

Next, based on Fig. 12, an encrypted data search process by the data center apparatus 401 is explained.

If the center-side data transmission/reception unit 402 receives the search query (YES in step S1201), in step S1202, the search processing unit 406 determines whether the search query includes the bit value that has been disclosed or not.

If the search query does not include the bit value that has been disclosed (NO in step S1202), in step S1204, the search processing unit 406 performs a search using the trapdoor. In other words, the search processing unit 406 compares the trapdoor with the encrypted tag. Then, the search processing unit 406 specifies the encrypted tag that has been generated from the keyword that is same as the keyword that has been used to generate the trapdoor, and extracts the encrypted data being related to the specified tag data.

On the other hand, if the search query includes the bit value that has been disclosed (YES in step S1202), in step S1203, the search processing unit 406 performs a search using the trapdoor only for the encrypted tag being related to the encrypted index bit sequence that includes the bit value that is same as the disclosed bit value included in the search query.

Finally, the center-side data transmission/reception unit 402 transmits the encrypted data extracted by the search processing unit 406 to the access terminal apparatus 301 from which the search query has been transmitted.

Next, based on Fig. 10, an index bit value disclosure process by the access terminal apparatus 301 is explained.

First, in step S1001, the allowed bit position specification unit 308 specifies an allowed bit position.

For example, if a search efficiency by the data center apparatus 401 becomes equal to or falls below a threshold, the allowed bit position specification unit 308 specifies the allowed bit position. As described above, the allowed bit position specification unit 308 may specify the allowed bit position in accordance with user's instructions, or may specify the allowed bit position in accordance with the predetermined algorithm. The allowed bit position specification unit 308 may gradually specify the allowed bit position by one bit each time, or may specify the allowed bit positions by two or more bits at a time.

Next, in step S 1002, the allowed bit position specification unit 308 acquires from the key management unit 305, the index key ik used to encrypt the bit value in the allowed bit position.

The allowed bit position specification unit 308 outputs to the terminal-side data transmission/reception unit 309, the index key ik acquired from the key management unit 305, together with information on the allowed bit position.

Next, in step S1003, the terminal-side data transmission/reception unit 309 transmits to the data center apparatus 401, the index key ik together with the information on the allowed bit position.

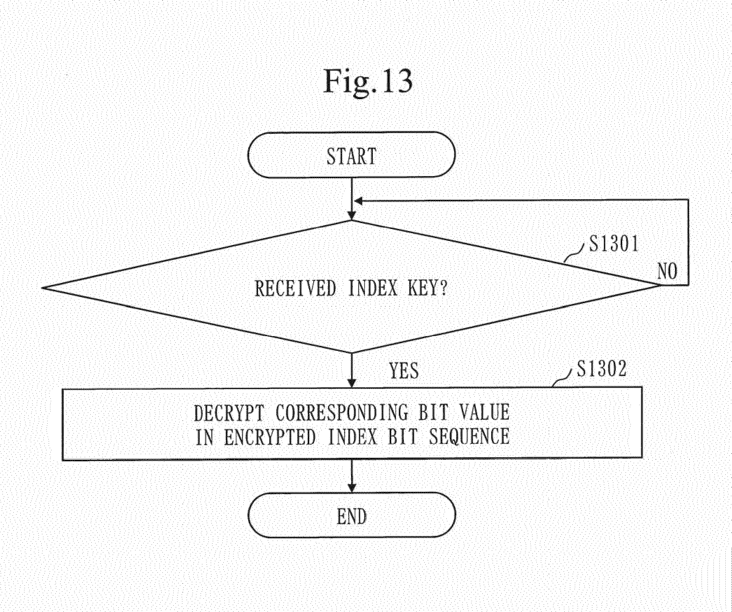

Next, based on Fig. 13, a decryption process of the bit value in the encrypted index bit sequence by the data center apparatus 401 is explained.

If the center-side data transmission/reception unit 402 receives the index key ik (YES in step S1301), in step S1302, the disclosed bit value decryption unit 405 decrypts the corresponding bit value within the encrypted index bit sequence using the index key ik.

If new encrypted data is registered with the data center apparatus 401 after disclosure of any of the bit values within the encrypted disclosed bit sequence, at a time when the new encrypted data is registered, all the bit values in the encrypted index bit sequence corresponding to the new encrypted data have been encrypted. The access terminal apparatus 301 transmits to the data center apparatus 401, the index key of the corresponding bit position also for the encrypted index bit sequence corresponding to the new encrypted data, and the data center apparatus 401 decrypts the corresponding bit position within the encrypted index bit sequence.

### *** Description of Advantageous Effects of Embodiment ***

According to the present embodiment, the access terminal apparatus 301 encrypts an index bit sequence using an index key of a common key scheme. For this reason, the present embodiment enables the access terminal apparatus 301 to accelerate a decryption process of the index bit sequence, and thereby enables acceleration of a search process.

According to the present embodiment, the access terminal apparatus 301 encrypts the index bit sequence using the index key of the common key scheme. For this reason, according to the present embodiment, no information is leaked from the encrypted index bit sequence prior to disclosure.

According to the present embodiment, the access terminal apparatus 301 generates the index bit sequence by implementing encryption by a deterministic encryption scheme in addition to a hash calculation. For this reason, according to the present embodiment, a risk that a keyword is analogized is small even if all bit values in the index bit sequence are disclosed.

### *** Description of Hardware Configuration ***

Finally, a supplementary explanation of a hardware configuration of the access terminal apparatus 301 and the data center apparatus 401 according to the present embodiment is described.

The processor 931 and the processor 941 illustrated in Fig. 14 and Fig. 15 are ICs (Integrated Circuits) that implement processing.

The processor 931 and the processor 941 are CPUs (Central Processing Units), DSPs (Digital Signal Processors), and the like.

The auxiliary storage device 932 and the auxiliary storage device 942 illustrated in Fig. 14 and Fig. 15 are ROMs (Read Only Memories), flash memories, HDDs (Hard Disk Drives), and the like.

The memory 933 and the memory 943 illustrated in Fig. 14 and Fig. 15 are RAMs (Random Access Memories).

The communication interface 934 and the communication interface 944 illustrated in Fig. 14 and Fig. 15 are electronic circuits to execute data communication process.

The communication interface 934 and the communication interface 944 are, for example, communication chips or NICs (Network Interface Cards).

The input/output interface 935 and the input/output interface 945 illustrated in Fig. 14 and Fig. 15 are, for example, mice, keyboards, displays, and the like.

The auxiliary storage device 932 also stores an OS (Operating System).

And, at least a part of the OS is executed by the processor 931.

The processor 931 executes a program to realize functions of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310, while executing at least a part of the OS.

By the processor 931 executing the OS, a task management, a memory management, a file management, a communication control, and the like, are carried out.

And, at least one of information, data, a signal value, and a variable value that indicates a process result of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 is stored in at least one of the auxiliary storage device 932, the memory 933, and a register and a cash memory of the processor 931.

And, the program to realize the functions of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 may be stored in a portable storage medium, such as a magnetic disk, a flexible disk, an optical disc, a compact disc, a Blu-ray (a registered trademark) disc, and a DVD.

The auxiliary storage device 942 also stores an OS (Operating System).

And, at least a part of the OS is executed by the processor 941.

The processor 941 executes a program to realize functions of the center-side data transmission/reception unit 402, the storage request processing unit 403, the disclosed bit value decryption unit 405, and the search processing unit 406, while executing at least a part of the OS.

By the processor 941 executing the OS, the task management, the memory management, the file management, the communication control, and the like, are carried out.

And, at least one of information, data, a signal value, and a variable value that indicates a process result of the center-side data transmission/reception unit 402, the storage request processing unit 403, the disclosed bit value decryption unit 405, and the search processing unit 406 is stored in at least one of the auxiliary storage device 942, the memory 943, and a register and a cash memory of the processor 941.

And, the program to realize the functions of the center-side data transmission/reception unit 402, the storage request processing unit 403, the disclosed bit value decryption unit 405, and the search processing unit 406 may be stored in a portable storage medium, such as a magnetic disk, a flexible disk, an optical disc, a compact disc, a Blu-ray (a registered trademark) disc, and a DVD.

And, a "unit" of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 may be replaced by a "circuit", a "step", a "procedure", or a "process". Similarly, a "unit" of the center-side data transmission/reception unit 402, the storage request processing unit 403, the disclosed bit value decryption unit 405, and the search processing unit 406 may be replaced by a "circuit", a "step", a "procedure", or a "process".

The access terminal apparatus 301 and the data center apparatus 401 may be realized by a processing circuit. The processing circuit is, for example, a logic IC (Integrated Circuit), a GA (Gate Array), an ASIC (Application Specific Integrated Circuit), and an FPGA (Field-Programmable Gate Array).

In this case, each of the data encryption unit 302, the encrypted tag generation unit 303, the tagged encrypted data generation unit 304, the key management unit 305, the search query generation unit 306, the data decryption unit 307, the allowed bit position specification unit 308, the terminal-side data transmission/reception unit 309, and the encrypted index bit sequence generation unit 310 is realized as a part of the processing circuit. And also, each of the center-side data transmission/reception unit 402, the storage request processing unit 403, the disclosed bit value decryption unit 405, and the search processing unit 406 is realized as a part of the processing circuit.

In this description, a broader concept of a processor, a memory, a combination of the processor and the memory, and the processing circuit is called as "processing circuitry".

In other words, each of the processor, the memory, the combination of the processor and the memory, and the processing circuit is an example of the "processing circuitry".

### Reference Signs List

100: searchable encryption system; 101: network; 102: LAN; 201: key management server apparatus; 301: access terminal apparatus; 302: data encryption unit; 303: encrypted tag generation unit; 304: tagged encrypted data generation unit; 305: key management unit; 306: search query generation unit; 307: data decryption unit; 308: allowed bit position specification unit; 309: terminal-side data transmission/reception unit; 310: encrypted index bit sequence generation unit; 401: data center apparatus; 402: center-side data transmission/reception unit; 403: storage request processing unit; 404: data storage unit; 405: disclosed bit value decryption unit; 406: search processing unit.

## Claims

1. A data processing apparatus (301) configured to: encrypt storage target data to generate encrypted data, the data processing apparatus (301) comprising:
an index bit sequence generation unit (310) configured to perform a predetermined calculation for a keyword to generate a bit sequence to be used as an index in searching for the encrypted data to be stored in a data storage apparatus (401) as an index bit sequence, associating the index bit sequence with the encrypted data, wherein the data processing apparatus (301) is configured to extract the keyword from the storage target data and generate an encrypted tag based on the keyword and a random number;
an index bit sequence encryption unit (310) configured to encrypt a plurality of bit values in the index bit sequence; and
a transmission unit (309) configured to transmit to the data storage apparatus, the encrypted index bit sequence, the encrypted tag and the encrypted data, the encrypted index bit sequence being the index bit sequence after the plurality of bit values is encrypted by the index bit sequence encryption unit,
**characterized in that**
the index bit sequence encryption unit (310) is configured to encrypt the plurality of bit values in the index bit sequence using an index key of a common key scheme; and
the data processing apparatus (301) is configured to generate the encrypted tag by encrypting the extracted keyword using the random number and an encryption key.

2. The data processing apparatus according to claim 1,
wherein the index bit sequence generation unit generates the index bit sequence, implementing encryption by a deterministic encryption scheme in a process of generating the index bit sequence.

3. The data processing apparatus according to claim 1,
wherein the index bit sequence encryption unit encrypts each of the plurality of bit values in the index bit sequence, using the different index keys.

4. The data processing apparatus according to claim 1,
wherein the index bit sequence encryption unit encrypts the plurality of bit values in the index bit sequence, using the fewer number of index keys than the number of bits in the index bit sequence.

5. The data processing apparatus according to claim 1,
wherein the index bit sequence generation unit generates the plurality of index bit sequences, associating the plurality of index bit sequences with the plurality of encrypted data; and
the index bit sequence encryption unit encrypts the bit values that are in a same bit position of the plurality of index bit sequences, using a same index key.

6. The data processing apparatus according to claim 1,
wherein the transmission unit transmits to the data storage apparatus, the encrypted index bit sequence, the encrypted data, and an encrypted tag that is an encrypted tag to be compared with in searching for the encrypted data.

7. The data processing apparatus according to claim 1,
wherein the index bit sequence encryption unit encrypts the plurality of bit values in the index bit sequence by an encryption scheme under which the encrypted bit values in bit positions of the plurality of bit positions in the index bit sequence other than an allowed bit position are not decrypted with the index key used to encrypt the bit value in the allowed bit position, the allowed bit position being the bit position for which disclosure of the bit value is allowed.

8. The data processing apparatus according to claim 7,
the data processing apparatus further comprising:
an allowed bit position specification unit (308) to specify the allowed bit position after the encrypted index bit sequence is transmitted to the data storage apparatus by the transmission unit,
wherein the transmission unit transmits to the data storage apparatus, the index key used to encrypt the bit value in the allowed bit position, after the allowed bit position is specified by the allowed bit position specification unit.

9. A data processing method for encrypting storage target data to generate encrypted data, the method comprising:
generating (S803) an encrypted tag;
performing (S804) a predetermined calculation for a keyword for generating, by a computer, a bit sequence to be used as an index in searching for encrypted data to be stored in a data storage apparatus as an index bit sequence, associating the index bit sequence with the encrypted data;
encrypting, by the computer, a plurality of bit values in the index bit sequence,; and
transmitting (S807), by the computer, to the data storage apparatus, an encrypted index bit sequence, the encrypted tag and the encrypted data, the encrypted index bit sequence being the index bit sequence after the plurality of bit values is encrypted;
**characterized in that**
the plurality of bit values in the index bit sequence is encrypted using an index key of a common key scheme, the keyword is extracted from the storage target data and the encrypted tag is generated by encrypting the extracted keyword using a random number and an encryption key.

10. A data processing program for encrypting storage target data to generate encrypted data which causes a computer to execute:
an encrypted tag generation process of generating an encrypted tag;
an index bit sequence generation process of performing a predetermined calculation for a keyword for generating a bit sequence to be used as an index in searching for encrypted data to be stored in a data storage apparatus as an index bit sequence, associating the index bit sequence with the encrypted data;
an index bit sequence encryption process of encrypting a plurality of bit values in the index bit sequence; and
a transmission process of transmitting to the data storage apparatus, an encrypted index bit sequence, the encrypted tag and the encrypted data, the encrypted index bit sequence being the index bit sequence after the plurality of bit values is encrypted by the index bit sequence encryption process;
**characterized in that**
the data processing program causes the computer to execute:
the index bit sequence encryption process such that the plurality of bit values in the index bit sequence is encrypted using an index key of a common key scheme; and
the encrypted tag generation process such that the keyword is extracted from the storage target data and the encrypted tag is generated by encrypting the extracted keyword using a random number and an encryption key.

## Patentansprüche

1. Datenverarbeitungsvorrichtung (301), die eingerichtet ist zum: Verschlüsseln von Speicherzieldaten, um verschlüsselte Daten zu erzeugen, wobei die Datenverarbeitungsvorrichtung (301) umfasst:
eine Indexbitsequenz-Erzeugungseinheit (310), die eingerichtet ist, eine vorbestimmte Berechnung für ein Schlüsselwort durchzuführen, um eine Bitsequenz zu erzeugen, die als ein Index beim Suchen nach den verschlüsselten Daten zu verwenden ist, die in einer Datenspeichervorrichtung (401) als eine Indexbitsequenz zu speichern sind, wobei die Indexbitsequenz den verschlüsselten Daten zugeordnet ist, wobei die Datenverarbeitungsvorrichtung (301) eingerichtet ist, das Schlüsselwort aus den Speicherzieldaten zu extrahieren und ein verschlüsseltes Tag basierend auf dem Schlüsselwort und einer Zufallszahl zu erzeugen;
eine Indexbitsequenz-Verschlüsselungseinheit (310), die eingerichtet ist, eine Vielzahl von Bitwerten in der Indexbitsequenz zu verschlüsseln; und
eine Übertragungseinheit (309), die eingerichtet ist, an die Datenspeichervorrichtung die verschlüsselte Indexbitsequenz, das verschlüsselte Tag und die verschlüsselten Daten zu übertragen, wobei die verschlüsselte Indexbitsequenz die Indexbitsequenz ist, nachdem die Vielzahl von Bitwerten durch die Indexbitsequenz-Verschlüsselungseinheit verschlüsselt wurden,
**dadurch gekennzeichnet, dass**
die Indexbitsequenz-Verschlüsselungseinheit (310), eingerichtet ist, die Vielzahl von Bitwerten in der Indexbitsequenz unter Verwendung eines Indexschlüssels eines gemeinsamen Schlüsselschemas zu verschlüsseln; und
die Datenverarbeitungsvorrichtung (301) eingerichtet ist, das verschlüsselte Tag durch Verschlüsseln des extrahierten Schlüsselworts unter Verwendung der Zufallszahl und eines Verschlüsselungsschlüssels zu erzeugen.

2. Datenverarbeitungsvorrichtung nach Anspruch 1,
wobei die Indexbitsequenz-Erzeugungseinheit die Indexbitsequenz erzeugt, wobei eine Verschlüsselung durch ein deterministisches Verschlüsselungsschema in einem Prozess des Erzeugens der Indexbitsequenz implementiert wird.

3. Datenverarbeitungsvorrichtung nach Anspruch 1,
wobei die Indexbitsequenz-Verschlüsselungseinheit jeden der Vielzahl von Bitwerten in der Indexbitsequenz unter Verwendung verschiedener Indexschlüssel verschlüsselt.

4. Datenverarbeitungsvorrichtung nach Anspruch 1,
wobei die Indexbitsequenz-Verschlüsselungseinheit die Vielzahl von Bitwerten in der Indexbitsequenz unter Verwendung der geringeren Anzahl von Indexschlüsseln als der Anzahl von Bits in der Indexbitsequenz verschlüsselt.

5. Datenverarbeitungsvorrichtung nach Anspruch 1,
wobei die Indexbitsequenz-Erzeugungseinheit die Vielzahl von Indexbitsequenzen erzeugt, wobei die Vielzahl von Indexbitsequenzen der Vielzahl von verschlüsselten Daten zugeordnet werden; und
die Indexbitsequenz-Verschlüsselungseinheit die Bitwerte, die in einer gleichen Bitposition der Vielzahl von Indexbitsequenzen sind, unter Verwendung eines gleichen Indexschlüssels verschlüsselt.

6. Datenverarbeitungsvorrichtung nach Anspruch 1,
wobei die Übertragungseinheit an die Datenspeichervorrichtung die verschlüsselte Indexbitsequenz, die verschlüsselten Daten und ein verschlüsseltes Tag, das ein verschlüsseltes Tag ist, mit dem beim Suchen nach den verschlüsselten Daten verglichen werden soll, überträgt.

7. Datenverarbeitungsvorrichtung nach Anspruch 1,
wobei die Indexbitsequenz-Verschlüsselungseinheit die Vielzahl von Bitwerten in der Indexbitsequenz durch ein Verschlüsselungsschema verschlüsselt, unter dem die verschlüsselten Bitwerte in Bitpositionen der Vielzahl von Bitpositionen in der Indexbitsequenz, die nicht eine erlaubte Bitposition sind, nicht mit dem Indexschlüssel entschlüsselt werden, der verwendet wird, den Bitwert in der erlaubten Bitposition zu verschlüsseln, wobei die erlaubte Bitposition die Bitposition ist, für die eine Offenlegung des Bitwertes erlaubt ist.

8. Datenverarbeitungsvorrichtung nach Anspruch 7,
wobei die Datenverarbeitungsvorrichtung ferner umfasst:
eine Spezifikationseinheit (308) für die erlaubte Bitposition, um die erlaubte Bitposition zu spezifizieren, nachdem die verschlüsselte Indexbitsequenz durch die Übertragungseinheit an die Datenspeichervorrichtung übertragen wurde,
wobei die Übertragungseinheit den Indexschlüssel, der verwendet wird, um den Bitwert in der erlaubten Bitposition zu verschlüsseln, an die Datenspeichervorrichtung überträgt, nachdem die erlaubte Bitposition durch die Spezifikationseinheit für die erlaubte Bitposition spezifiziert wurde.

9. Datenverarbeitungsverfahren zum Verschlüsseln von Speicherzieldaten, um verschlüsselte Daten zu erzeugen, wobei das Verfahren umfasst:
Erzeugen (S803) eines verschlüsselten Tags;
Durchführen (S804) einer vorbestimmten Berechnung für ein Schlüsselwort, zum Erzeugen, durch einen Computer, einer Bitsequenz, die als ein Index beim Suchen nach verschlüsselten Daten zu verwenden ist, die in einer Datenspeichervorrichtung als eine Indexbitsequenz zu speichern sind, wobei die Indexbitsequenz den verschlüsselten Daten zugeordnet ist;
Verschlüsseln, durch einen Computer, einer Vielzahl von Bitwerten in der Indexbitsequenz, und
Übertragen (S807), durch einen Computer, an die Datenspeichervorrichtung einer verschlüsselten Indexbitsequenz, des verschlüsselten Tags und der verschlüsselten Daten, wobei die verschlüsselte Indexbitsequenz die Indexbitsequenz ist, nachdem die Vielzahl von Bitwerten verschlüsselt wurden;
**dadurch gekennzeichnet, dass**
die Vielzahl von Bitwerten in der Indexbitsequenz unter Verwendung eines Indexschlüssels eines gemeinsamen Schlüsselschemas verschlüsselt wird, das Schlüsselwort aus den Speicherzieldaten extrahiert wird und das verschlüsselte Tag durch Verschlüsseln des extrahierten Schlüsselwortes unter Verwendung einer Zufallszahl und eines Verschlüsselungsschlüssels erzeugt wird.

10. Datenverarbeitungsprogramm zum Verschlüsseln von Speicherzieldaten zum Erzeugen verschlüsselter Daten, das einen Computer veranlasst, auszuführen:
einen Verschlüsseltes-Tag-Erzeugungsprozess des Erzeugens eines verschlüsselten Tags;
einen Indexbitsequenz-Erzeugungsprozess des Durchführens einer vorbestimmten Berechnung für ein Schlüsselwort zum Erzeugen einer Bitsequenz, die als ein Index beim Suchen nach verschlüsselten Daten zu verwenden ist, die in einer Datenspeichervorrichtung als eine Indexbitsequenz zu speichern sind, wobei die Indexbitsequenz den verschlüsselten Daten zugeordnet wird;
einen Indexbitsequenz-Verschlüsselungsprozess des Verschlüsselns einer Vielzahl von Bitwerten in der Indexbitsequenz; und
einen Übertragungsprozess des Übertragens an die Datenspeichervorrichtung einer verschlüsselten Indexbitsequenz, des verschlüsselten Tags und der verschlüsselten Daten, wobei die verschlüsselte Indexbitsequenz die Indexbitsequenz ist, nachdem die Vielzahl von Bitwerten durch den Indexbitsequenz-Verschlüsselungsprozess verschlüsselt wurden;
**dadurch gekennzeichnet, dass**
das Datenverarbeitungsprogramm den Computer veranlasst, auszuführen:
den Indexbitsequenz-Verschlüsselungsprozess, so dass die Vielzahl von Bitwerten in der Indexbitsequenz unter Verwendung eines Indexschlüssels eines gemeinsamen Schlüsselschemas verschlüsselt werden; und
den Verschlüsseltes-Tag-Erzeugungsprozess, so dass das Schlüsselwort aus den Speicherzieldaten extrahiert wird und das verschlüsselte Tag durch Verschlüsseln des extrahierten Schlüsselwortes unter Verwendung einer Zufallszahl und eines Verschlüsselungsschlüssels erzeugt wird.

## Revendications

1. Appareil de traitement de données (301), configuré pour chiffrer des données cibles de stockage, afin de générer des données chiffrées, l'appareil de traitement de données (301) comprenant :
une unité de génération de séquence de bits d'index (310), configurée pour exécuter un calcul prédéterminé d'un mot clé, afin de générer une séquence de bits à utiliser en tant qu'index dans une recherche de données chiffrées à stocker dans un appareil de stockage de données (401) en tant que séquence de bits d'index, en associant la séquence de bits d'index aux données chiffrées, dans lequel l'appareil de traitement de données (301) est configuré pour extraire le mot clé des données cibles de stockage, et pour générer une étiquette chiffrée sur la base du mot clé et d'un nombre aléatoire ;
une unité de chiffrement de séquence de bits d'index (310), configurée pour chiffrer une pluralité de valeurs de bits dans la séquence de bits d'index ; et
une unité de transmission (309), configurée pour transmettre à l'appareil de stockage de données, la séquence de bits d'index chiffrée, l'étiquette chiffrée et les données chiffrées, la séquence de bits d'index chiffrée étant la séquence de bits d'index une fois que la pluralité de valeurs de bits ont été chiffrées par l'unité de chiffrement de séquence de bits d'index,
**caractérisé en ce que**
l'unité de chiffrement de séquence de bits d'index (310) est configurée pour chiffrer la pluralité de valeurs de bits dans la séquence de bits d'index en utilisant une clé d'index d'un système de clé commune ; et
l'appareil de traitement de données (301) est configuré pour générer l'étiquette chiffrée en chiffrant le mot clé extrait en utilisant le nombre aléatoire et une clé de chiffrement.

2. Appareil de traitement de données selon la revendication 1,
dans lequel l'unité de génération de séquence de bits d'index génère la séquence de bits d'index, en mettant en œuvre un chiffrement avec un système de chiffrement déterministe dans un processus consistant à générer la séquence de bits d'index.

3. Appareil de traitement de données selon la revendication 1,
dans lequel l'unité de génération de séquence de bits d'index chiffre chacune de la pluralité de valeurs de bits dans la séquence de bits d'index, en utilisant différentes clés d'index.

4. Appareil de traitement de données selon la revendication 1,
dans lequel l'unité de chiffrement de séquence de bits d'index, chiffre la pluralité de valeurs de bits dans la séquence de bits d'index, en utilisant un nombre de clés d'index inférieur au nombre de bits dans la séquence de bits d'index.

5. Appareil de traitement de données selon la revendication 1,
dans lequel l'unité de génération de séquence de bits d'index génère la pluralité de séquences de bits d'index, en associant la pluralité de séquences de bits d'index à la pluralité de données chiffrées ; et
l'unité de chiffrement de séquence de bits d'index chiffre les valeurs de bits qui se situent à la même position de bit de la pluralité de séquences de bits d'index, en utilisant une même clé d'index.

6. Appareil de traitement de données selon la revendication 1,
dans lequel l'unité de transmission transmet à l'appareil de stockage de données, la séquence de bits d'index chiffrée, les données chiffrées, et une étiquette chiffrée qui est une étiquette chiffrée de comparaison dans une recherche de données chiffrées.

7. Appareil de traitement de données selon la revendication 1,
dans lequel l'unité de chiffrement de séquence de bits d'index chiffre la pluralité de valeurs de bits dans la séquence de bits d'index avec un système de chiffrement selon lequel les valeurs de bits chiffrées à des positions de bits de la pluralité de positions de bits dans la séquence de bits d'index, autres qu'une position de bit permise, ne sont pas déchiffrées avec la clé d'index utilisée pour chiffrer la valeur de bit à la position de bit permise, la position de bit permise étant la position de bit où est permise la divulgation de la valeur de bit.

8. Appareil de traitement de données selon la revendication 7,
l'appareil de traitement de données comprenant en outre :
une unité de spécification de position de bit permise (308), pour spécifier la position de bit permise une fois que la séquence de bits d'index a été transmise à l'appareil de stockage de données par l'unité de transmission,
dans lequel l'unité de transmission transmet à l'appareil de stockage de données, la clé d'index utilisée pour chiffrer la valeur de bit à la position de bit permise, une fois que la position de bit permise a été spécifiée par l'unité de spécification de position de bit permise.

9. Procédé de traitement de données pour chiffrer des données cibles de stockage afin de générer des données chiffrées, le procédé comprenant les étapes suivantes :
générer (S803) une étiquette chiffrée ;
exécuter (S804) un calcul prédéterminé d'un mot clé afin de générer, avec un ordinateur, une séquence de bits à utiliser en tant qu'index dans une recherche de données chiffrées à stocker dans un appareil de stockage de données en tant que séquence de bits d'index, en associant la séquence de bits d'index aux données chiffrées ;
chiffrer, avec l'ordinateur, une pluralité de valeurs de bits dans la séquence de bits d'index ; et
transmettre (S807), avec l'ordinateur, à l'appareil de stockage de données, une séquence de bits d'index chiffrée, l'étiquette chiffrée et les données chiffrées, la séquence de bits d'index chiffrée étant la séquence de bits d'index une fois que la pluralité de valeurs de bits ont été chiffrées ;
**caractérisé en ce que**
la pluralité de valeurs de bits dans la séquence de bits d'index sont chiffrées en utilisant une clé d'index d'un système de clé commune, le mot clé est extrait des données cibles de stockage, et l'étiquette chiffrée est générée en chiffrant le mot clé extrait en utilisant un nombre aléatoire et une clé de chiffrement.

10. Programme de traitement de données pour chiffrer des données cibles de stockage afin de générer des données chiffrées qui font exécuter par un ordinateur :
un processus de génération d'étiquette chiffrée, consistant à générer une étiquette chiffrée ;
un processus de génération de séquence de bits d'index, consistant à exécuter un calcul prédéterminé d'un mot clé, afin de générer une séquence de bits à utiliser en tant qu'index dans une recherche de données chiffrées à stocker dans un appareil de stockage de données en tant que séquence de bits d'index, en associant la séquence de bits d'index aux données chiffrées ;
un processus de chiffrement de séquence de bits d'index, consistant à chiffrer une pluralité de valeurs de bits dans la séquence de bits d'index; et
un processus de transmission, consistant à transmettre à l'appareil de stockage de données, la séquence de bits d'index chiffrée, l'étiquette chiffrée et les données chiffrées, la séquence de bits d'index chiffrée étant la séquence de bits d'index une fois que la pluralité de valeurs de bits ont été chiffrées par le processus de chiffrement de séquence de bits d'index ;
**caractérisé en ce que**
le programme de traitement de données fait exécuter par l'ordinateur :
le processus de chiffrement de séquence de bits d'index, de telle sorte que la pluralité de valeurs de bits dans la séquence de bits d'index, soient chiffrées en utilisant une clé d'index d'un système de clé commune ; et
le processus de génération d'étiquette chiffrée, de telle sorte que le mot clé soit extrait des données cibles de stockage, et que l'étiquette chiffrée soit générée en chiffrant le mot clé extrait en utilisant un nombre aléatoire et une clé de chiffrement.
